# EUROPEAN PATENT SPECIFICATION

(11) **EP 2 587 747 B1**
(45) Date of publication and mention of the grant of the patent: **29.04.2020**
(21) Application number: 11797499.8
(22) Date of filing: 01.03.2011
(51) Int. Cl.: H04L 12/58

(54) **METHOD AND APPARATUS FOR CREATING INDEPENDENT MESSAGE PAGE**
VERFAHREN UND VORRICHTUNG ZUR ERSTELLUNG EINER UNABHÄNGIGEN NACHRICHTENSEITE
PROCÉDÉ ET APPAREIL DE CRÉATION DE PAGE DE MESSAGE INDÉPENDANTE

(30) Priority: 24.06.2010 CN 201010208517
(43) Date of publication of application: 01.05.2013
(73) Proprietor: Tencent Technology (Shenzhen) Company Limited, Shenzhen Guangdon 518044 (CN)
(72) Inventor: KU, Yu, Guangdong 518044 (CN)
(74) Representative: Gunzelmann, Rainer
(86) International application number: PCT/CN2011/071421
(87) International publication number: WO 2011/160468

(56) References cited:
- CN-A- 1 777 186
- CN-A- 101 447 949
- US-A1- 2005 055 412
- US-A1- 2006 095 397
- US-A1- 2006 248 150
- US-A1- 2007 288 601
- US-A1- 2009 013 265
- US-A1- 2009 047 934
- Debbie Levitt: "How to IRC - Windows", , 13 May 2008 (2008-05-13), pages 1-10, XP055325216, Retrieved from the Internet: URL:http://web.archive.org/web/20080513084 317/http://www.frenz.com/pirch.html [retrieved on 2016-12-01]
- Anonymous: "How can I send a private message in IRC chat?", , 6 June 2010 (2010-06-06), pages 1-1, XP055325208, Retrieved from the Internet: URL:http://web.archive.org/web/20100606041 929/http://www.computerhope.com/issues/ch0 01174.htm [retrieved on 2016-12-01]

## Description

### Field of the Invention

The present invention relates to Internet technologies, and more particularly to a method and apparatus for establishing an independent message page.

### Background of the Invention

With the developments of network technologies and the expansion of the impacts of the network, Instant Messaging (IM) tools have been accepted by most Internet users and have become essential software tools of the Internet users. The IM tools are widely used in the entertainment and normal work. Hence, the users have high requirements for the IM tools about the usability, stability and security.

In the procedure of using the IM tool, the IM tool may be combined with a micro-blog tool. Micro-blog messages are displayed on a main panel of an IM client chronologically. Specifically, all of the micro-blog messages may be checked via tab pages on the main panel, and the tab page includes a home page, a @ page (i.e. a replay page) and a guest page etc.

By using the micro-blog tool, the user may select to receive the micro-blog messages published by another user and become an audience of the another user, and the user may also have audiences receiving the micro-blog message published by the user. By using the home page, the user receives the micro-blog message published by other users, checks the micro-blog message published by the user, checks comments corresponding to the micro-blog messages, and performs other operations related to the micro-blog messages. By using the @ page, the user checks all of micro-blog messages in which the user is mentioned. By using the guest page corresponding to a certain audience, the user checks all of micro-blog messages published by the audience.

In the procedure of implementing the present invention, shortcomings of conventional modes are found.

When the number of the micro-blog messages received by the user is too large, it is difficult to display all of the micro-blog messages because of the limited space on the main panel of the IM client for displaying the micro-blog messages, and thus when a single micro-blog message is displayed, details of the single micro-blog message can not be displayed clearly and completely.

Debbie Levitt: "How to IRC - Windows", 13 May 2008 (2008-05-13), pages 1-10, XP055325216, discloses how to set up chat room capability on your windows PC using PIRCH software and IRC technology.

Anonymous: "How can I send a private message in IRC chat?", 6 June 2010 (2010-06-06), page 1-1, XP055325208, discloses how to send a private message in IRC chat.

US 2005/055412 A1 disclose techniques for managing instant messages, including the display of windows for incoming messages, as well as for managing status information for instant messaging users. In one aspect, an instant messaging user defines policy information to programmatically determine a response to an arriving instant message. As an example, the policy may control whether a new window will pop up for a newly-arriving message, and may specify other attributes of the window if desired. In another aspect, an instant messaging user defines attributes pertaining to how his instant messaging status will be presented to others.

### Summary of the Invention

The present invention provides a method (according to claim 1) and apparatus (according to claim 9) for establishing an independent message page to improve usability and interactivity of the IM client.

The present invention provides a method for establishing an independent message page, which includes:
obtaining, by an IM client, a trigger event for a message in a main panel, and obtaining identification information of the message according to the trigger event;
determining, by the IM client, an independent message page corresponding to the identification information of the message;
displaying, by the IM client, the independent message page;
wherein the independent message page comprises a sender message display area;
determining, by the IM client, an independent message page corresponding to the identification information of the micro-blog message comprises:
   obtaining, by the IM client, contents and a type of the micro-blog message according to the identification information of the micro-blog message, and displaying the contents and the type of the micro-blog message in the sender message display area.

The present invention also provides an apparatus for establishing an independent message page, which includes:
an obtaining module, adapted to obtain a trigger event for a message in a main panel, and obtain identification information of the message according to the trigger event;
an establishing module, adapted to determine an independent message page corresponding to the identification information of the message obtained by the obtaining module;
a displaying module, adapted to display the independent message page established by the establishing module'
wherein the establishing module (320) is adapted to, when the independent message page comprises a sender message display area, obtain contents and a type of the micro-blog message according to the identification information of the micro-blog message, and display the contents and the type of the micro-blog message in the sender message display area.

By using the solutions of the present invention, technical effects are obtained. In the embodiments of the present invention, the independent message page is established and displayed for the message according to the trigger event for the message in the main panel, and the entrance for the independent message page corresponding to the message in the main panel is provided, and thus the displayed contents of the message is greatly increased, and the usability and interactivity of the IM client are improved.

### Brief Description of the Drawings

In order to make the technical solution of the present invention or prior art clearer, accompanying drawings used in embodiments of the present invention or prior art will be illustrated simply hereinafter. Obviously, the described accompanying drawings are only preferred embodiments of the present invention. Those skilled in the art may obtain other accompanying drawings according to these accompanying drawings without inventive labor when falling within the scope of the invention as defined by the appended claims.
Figure 1 is a flowchart illustrating a method for establishing an independent message page according to an embodiment one of the present invention.
Figure 2 is a schematic diagram illustrating an independent message page in an application scenario according to an embodiment of the present invention.
Figure 3 is a schematic diagram illustrating an apparatus for establishing an independent message page according to an embodiment of the present invention.
Figure 4 is a schematic diagram illustrating an apparatus for establishing an independent message page in an application scenario according to an embodiment of the present invention.

### Detailed Description of the Invention

In the technical solutions of the present invention, when an IM client is combined with a micro-blog client, an independent message page of the micro-blog is implemented in the IM client, so that a user can enter an independent message page corresponding to a micro-blog message by triggering a message body displaying the micro-blog message in the main panel of the IM client. In the independent message page, if the micro-blog message includes multimedia information, e.g. a picture, an audio or a video, a thumbnail of the multimedia information is displayed, e.g. a thumbnail of the picture or video is displayed and various operations, e.g. a copying operation and an opening operation can be performed. If the micro-blog message is a dialog message, e.g. the micro-blog message relates to a dialog between users, original texts of the dialog are displayed and contents of the whole dialog may be checked based on the original texts. If the micro-blog message is a forwarding message, e.g. the micro-blog message is published by another user and forwarded by this user, when the times of forwarding an original message corresponding to the forwarding message exceeds a preset value, e.g. 10 times, the times of forwarding the original message is displayed. In addition, the independent message page may also display a detailed message source, a specific terminal sending the message and provide descriptions of the specific terminal.

The technical solutions of the present invention will be illustrated in detail hereinafter with reference to the accompanying drawings. Obviously, the described embodiments are only parts of the embodiments of the present invention. Other embodiments obtained by those skilled in the art without inventive labor are all belong to the protection scope of the present invention.

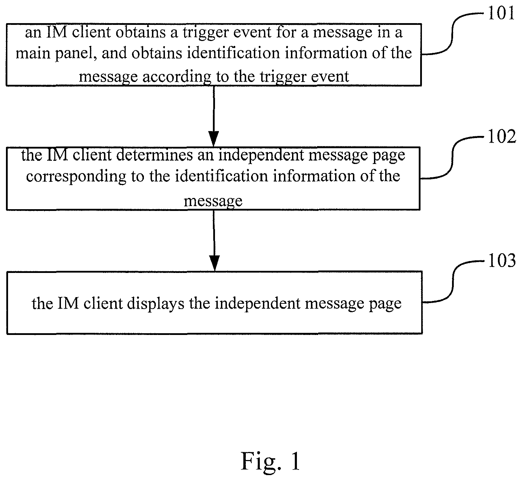

Figure 1 is a flowchart illustrating a method for establishing an independent message page according to an embodiment one of the present invention. As shown in Figure 1, the method includes the following operations.

In block 101, an IM client obtains a trigger event for a message in a main panel, and obtains identification information of the message according to the trigger event.

The trigger event may be a mouse click event which includes a mouse double-click event. The IM client monitors the double-click event in a message body area of the main panel. When a user double-clicks the message body area, the IM client obtains the double-click event, obtains a key value of a message corresponding to the double-click event according to a location of the double-clicked message body, takes the key value as the identification information of the message, notifies a control management center of the IM client to establish an independent message page, i.e. sends a request for establishing an independent message page, and transmits parameters to the control management center, the parameters includes data needed for establishing the independent message page.

In block 102, the IM client determines an independent message page corresponding to the identification information of the message.

Specifically, the control management center of the IM client determines whether to establish the independent message page according to a service logic. The service logic may be a displaying logic of the independent message page, for example, displaying the independent message page after a double-click operation or displaying the independent message page by clicking an option in a right click menu.

For one user, because there is only one instance for the home page, the @ page and the independent message page globally, each of the home page, the @ page and the independent message page has only one page, and each audience of the user corresponding to one client page. After the control management center receives the request for establishing the independent message page, if the request includes the identification information of the message, the control management center determines whether the independent message page corresponding to the identification information has been established. If the independent message page corresponding to the identification information has been established, the IM client directly determines the independent message page corresponding to the identification information of the message; if the independent message page corresponding to the identification information has not been established, the IM client establishes the independent message page corresponding to the identification information of the message.

In the embodiments of the present invention, when establishing the independent message page corresponding to the identification information, in one case, when no independent message page has been established, an independent message page is established, and contents of the independent message page correspond to the identification information; in the other case, when contents of an established independent message page do not correspond to the identification information, the established independent message page is updated, so as to make the contents of the independent message page correspond to the identification information.

When the independent message page is established, globally unique information of the independent message page may be stored by a DataService variable, so that the IM client just needs to establish the independent message page once, and the independent message page is globally unique. After the independent message page has been established, for contents of a message corresponding to the same key value, the IM client does not need to change the independent message page. For contents of a message corresponding to a different key value, the IM client establishes the independent message page corresponding to different key value by reassigning each part of the established independent message page, so that the contents of the message corresponding to the different key value is displayed on the same independent message page without reestablishing the independent message page, thereby improving the work performance of the IM client. The independent message page includes at least one of the following content display areas: a sender information area, a sender message display area, a message source display area and a specific information display area.

In block 103, the IM client displays the independent message page.

Because there is only one global visible page, when one of the home page, the @ page and the independent message page is displayed, other pages are hidden.

In the embodiments of the present invention, when the message corresponding to the trigger event is a forwarding message or a dialog message, the IM client displays a message source display area by using the independent message page, and the displaying logic of the message source display area is the same as that of the sender message display area. When the message corresponding to the trigger event is a message of other types, the message source display area is hidden.

In addition, in the independent message page, operations performed by using the mouse right key are supported in the sender message display area and the message source display area. Specifically, because the independent message page belongs to one kind of controls, and a mouse right click event can be monitored in a control layer. When the mouse right click event happens, it is determined whether a location of a mouse is in the sender message display area or the message source display area, if the location of the mouse is in the sender message display area or the message source display area, it is further determined whether the location of the mouse is in a picture preview area. If the location of the mouse is in the picture preview area, the IM client responses the mouse right click event with a picture right click menu; otherwise, the IM client responses with a message body right click menu. The picture right click menu and the message body right click menu may be different or not.

In the block 102, when the independent message page includes the sender information area, the IM client obtains User Identification Number (UIN) of a sender of the message from a message information center located in the IM client according to the identification information of the message, obtains a head portrait picture of the sender of the message according to the UIN, and obtains authentication information of the sender of the message from an authentication server according to the UIN; the authentication information includes a nickname and a micro-blog website etc. The IM client displays the obtained head portrait picture and authentication information in the sender information display area. The IM client monitors the mouse click event for the head portrait picture, the mouse click event for the authentication picture or the micro-blog website of the authentication information. When the mouse click event happens, the IM client determines a jump address according to an identification field of the mouse click event, and jumps to a page corresponding to the address.

When the independent message page includes the sender message display area, the IM obtains contents and a type of the message according to the identification information of the message, and generates the sender message display area according to the contents and type of the message. When the type of the message is simple text, the message is displayed directly. When the type of the message is a Uniform/Universal Resource Locator (URL) message, special effects, e.g. a special color and a under line are configure for the URL message and an address of the URL message is stored in the IM client, when the URL message is clicked, the website corresponding to the URL message is jumped to. When the type of the message is a topic message, e.g. micro-blog messages published by multiple users for a certain topic, special characters are added in front of and behind a key word of the topic, when the topic message is clicked, the website corresponding to the contents of the topic is jumped to. When the contents of the message include identification information of a guest, special effect or special color is configured, when the identification information is clicked, a guest page corresponding to the guest is triggered. When the contents of the message include multimedia information, e.g. picture information, audio information or video information, a preview effect picture of the multimedia information is displayed, and various operations can be performed for the multimedia information, e.g. a copy operation and an open operation.

When the independent message page includes the message source display area, the IM client obtains contents and type of a message source of the message according to the identification information of the message, and displays the contents and the type of the message source of the message in the message source display area. When the independent message page includes specific information display area, the IM client obtains sending time and a sending mode of the message according to the identification information of the message, and displays the sending time and sending mode of the message in the specific information display area. If the message is a forwarding message, the IM client obtains the times of forwarding the message and performs various operations for the message, e.g. a dialog operation, a forwarding operation, a copying operation and a reporting operation. If the message is published by the user via using the IM client, the operations can be performed also includes a cancelling operation. When the cancelling operation is performed, the source of the independent message page (e.g. the home page) is notified of that the message is cancelled the message, and the corresponding interface is updated. The identification information of the message may be the key value of the message.

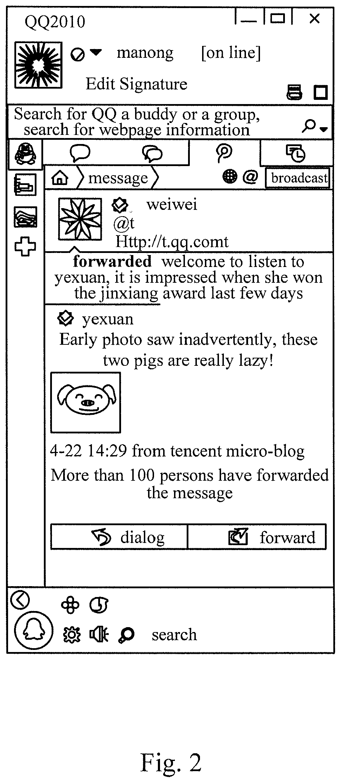

Figure 2 is a schematic diagram illustrating an independent message page in an application scenario according to an embodiment of the present invention. A development environment of the effect diagram is ATL project of VS2005. The independent message page includes a sender information area, a sender message display area, a message source display area and a specific information display area, and also includes two buttons "dialog" and "forwarding" which are located at the bottom of the independent message page and displayed in the middle. The IM client monitors a sizechange event in the control layer. When the sizechange event happens, the IM client calculates the width of the whole panel, and reassigns the size of the two buttons, so that the sizes of the two button "dialog" and "forwarding" are automatically changes with the width of the panel.

Because the lengths of the micro-blog messages corresponding to different message bodies may be different, when different message bodies are triggered, all of the contents of the micro-blog message corresponding to different message bodies can not be displayed by the independent message page with the same size. Hence, when assignment is performed for content data of the independent message page, the size of the independent message page is calculated, and information, e.g. a location of a scroll bar is dynamically determined according to the size of the current main panel, e.g. the size of a user home page, so that when the contents of the micro-blog message are large, the user can check all of the contents of the micro-blog message by dragging the scroll bar. As shown in Figure 2, below the head portrait area, i.e. the head portrait of weiwei, a sharp corner effect is displayed, and a whole background picture may be drawn by using a jiugong mode, and a gradient color effect may be used, so that the color of the whole message area is transit naturally.

In the embodiments of the present invention, the independent message page is established and displayed for the message according to the trigger event for the message in the main panel, and the entrance for the independent message page corresponding to the message in the main panel is provided, and thus the displayed contents of the message is greatly increased, and the usability and interactivity of the IM client are improved.

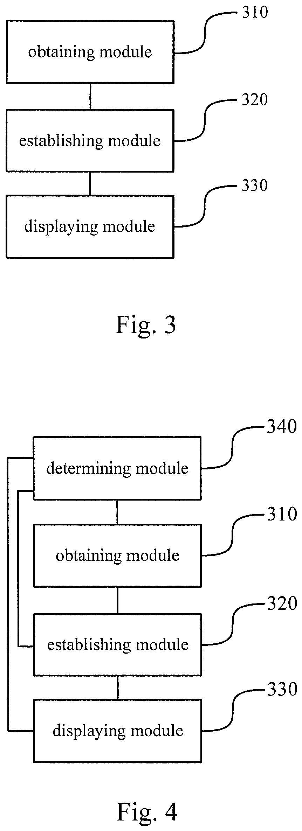

Figure 3 is a schematic diagram illustrating an apparatus for establishing an independent message page according to an embodiment of the present invention. As shown in Figure 3, the apparatus includes an obtaining module 310, an establishing module 320 and a displaying module 330.

The obtaining module 310 is adapted to obtain a trigger event for a message in a main panel, and obtain identification information of the message according to the trigger event.

The establishing module 320 is adapted to determine an independent message page corresponding to the identification information of the message obtained by the obtaining module 310.

The displaying module 330 is adapted to display the independent message page established by the establishing module 320.

The identification information of the message includes a key value of the message corresponding to the trigger event. The independent message page includes at least one of the following: a sender information area, a sender message display area, a message source display area and a specific information display area.

When the independent message page includes the sender information area, the establishing module 320 is adapted to obtain a UIN of a sender of the message from a message information center according to the identification information of the message, obtain a head portrait picture of the sender according to the UIN, and obtain authentication information of the sender from an authentication server; display the head portrait picture and the authentication information in the sender information area.

When the independent message page includes the sender message display area, the establishing module 320 is adapted to obtain contents and a type of the message according to the identification information of the message, and display the contents and the type of the message in the sender message display area.

When the independent message page includes the message source display area, the establishing module 320 is adapted to obtain contents and a type of a message source of the message according to the identification information of the message, and display the contents and the type of the message source in the message source display area.

When the independent message page includes specific information display area, the establishing module 320 is adapted to obtain sending time and a sending mode of the message according to the identification information of the message, and display the sending time and the sending mode of the message in the specific information display area. The identification information of the message may be the key value of the message.

Further, as shown in Figure 4, the apparatus further includes a determining module 340.

The displaying module 330 is further adapted to display the independent message page when the determining module 340 determines that the independent message page corresponding to the identification information has been established. The establishing module 320 is further adapted to establish the independent message page corresponding to the identification when the determining module 340 determines that the independent message page corresponding to the identification information is not established.

The establishing module 320 includes a first unit and a second unit. The first unit is adapted to establish the independent message page when no independent message page is established, and contents of the independent message page correspond to the identification information; the second unit is adapted to update a established independent message page when the established independent message page does not correspond to the identification information, and contents of the updated independent message page correspond to the identification information.

In the embodiments of the present invention, the independent message page is established and displayed for the message according to the trigger event for the message in the main panel, and the entrance for the independent message page corresponding to the message in the main panel is provided, and thus the displayed contents of the message is greatly increased, and the usability and interactivity of the IM client are improved.

According to the above description of examples, it can be clearly understood by those skilled in the art that the present invention can be realized by software accompanying with necessary general hardware platforms, or by hardware. In many cases, the former is a preferred manner. Based on this, the essential part of the technical solution of the present invention or the part contributed to the prior art can be in the form of a software product, and the computer software product is stored in a storage medium and includes several codes to make a computer device (such as a handset, a personal computer, a server or a network device) perform the method in embodiments of the present invention.

The foregoing is only preferred examples of the present invention which is solely defined by the appended claims.

Persons having ordinary skill in the art may understand that the modules in the device embodiment may be distributed in the device of the embodiment according to embodiment descriptions, or may change correspondingly to locate in one or more devices different from the embodiment. The modules in above embodiment may be merged into one module, or may be divided into multiple sub-modules furthermore.

## Claims

1. A method for establishing an independent message page for Instant Messaging, IM, tools, comprising:
obtaining (101), by an IM client, a trigger event for a micro-blog message in a main panel of the IM client, and obtaining identification information of the micro-blog message according to the trigger event;
determining (102), by the IM client, an independent message page corresponding to the identification information of the micro-blog message;
displaying (103), by the IM client, the independent message page;
**characterized in that**:
the independent message page comprises a sender message display area;
the step of determining, by the IM client, an independent message page corresponding to the identification information of the micro-blog message further comprises:
obtaining, by the IM client, contents and a type of the micro-blog message according to the identification information of the micro-blog message, and displaying the contents and the type of the micro-blog message in the sender message display area.

2. The method of claim 1, wherein the independent message page further comprises at least one of: a sender information area, a message source display area and a specific information display area.

3. The method of claim 2, wherein when the independent message page further comprises the sender information area,
determining, by the IM client, an independent message page corresponding to the identification information of the micro-blog message comprises:
obtaining, by the IM client, a User Identification Number, UIN, of a sender of the micro-blog message, according to the identification information of the micro-blog message,
obtaining, by the IM client, a head portrait picture of the sender according to the UIN, and obtaining authentication information of the sender;
displaying, by the IM client, the head portrait picture and the authentication information in the sender information display area.

4. The method of claim 2, wherein when the independent message page further comprises the message source display area,
determining, by the IM client, an independent message page corresponding to the identification information of the micro-blog message comprises:
obtaining, by the IM client, contents and a type of a message source of the micro-blog message according to the identification information of the micro-blog message, and displaying the contents and the type of the message source in the message source display area.

5. The method of claim 2, wherein when the independent message page further comprises a specific information display area;
determining, by the IM client, an independent message page corresponding to the identification information of the micro-blog message comprises:
obtaining, by the IM client, sending time and a sending mode of the micro-blog message according to the identification information of the micro-blog message, and displaying the sending time and the sending mode of the micro-blog message in the specific information display area.

6. The method of claim 1, wherein determining, by the IM client, an independent message page corresponding to the identification information of the micro-blog message comprises:
determining, by the IM client, whether the independent message page corresponding to the identification information has been established according to the identification information;
establishing, by the IM client, the independent message page corresponding to the identification when the independent message page corresponding to the identification information is not established.

7. The method of claim 6, wherein establishing, by the IM client, the independent message page corresponding to the identification comprises:
establishing the independent message page when no independent message page is established, and contents of the independent message page corresponding to the identification information;
updating an established independent message page when the established independent message page does not correspond to the identification information, and contents of the established independent message page updated corresponding to the identification information.

8. The method of any of claims 1 to 7, wherein the identification information of the micro-blog message is a key value of the micro-blog message.

9. An apparatus for establishing an independent message page for Instant Messaging, IM, tools, comprising:
an obtaining module (310), adapted to obtain a trigger event for a micro-blog message in a main panel of an IM client, and obtain identification information of the micro-blog message according to the trigger event;
an establishing module (320), adapted to determine an independent message page corresponding to the identification information of the micro-blog message obtained by the obtaining module;
a displaying module (330), adapted to display the independent message page established by the establishing module;
**characterized in that** the establishing module (320) is further adapted to, when the independent message page comprises a sender message display area, obtain contents and a type of the micro-blog message according to the identification information of the micro-blog message, and display the contents and the type of the micro-blog message in the sender message display area.

10. The apparatus of claim 9, wherein
the establishing module (320) is further adapted to, when the independent message page comprises a sender information area, obtain a UIN of a sender of the micro-blog message according to the identification information of the micro-blog message; obtain a head portrait picture of the sender according to the UIN, and obtain authentication information of the sender; display the head portrait picture and the authentication information in the sender information area.

11. The apparatus of claim 9, wherein
the establishing module (320) is further adapted to, when the independent message page comprises a message source display area, obtain contents and a type of a message source of the micro-blog message according to the identification information of the micro-blog message, and display the contents and the type of the message source in the message source display area.

12. The apparatus of claim 9, wherein
the establishing module (320) is further adapted to, when the independent message page comprises a specific information display area, obtain sending time and a sending mode of the micro-blog message according to the identification information of the micro-blog message, and display the sending time and the sending mode of the micro-blog message in the specific information display area.

13. The apparatus of claim 9, further comprising:
a determining module (340), further adapted to determine whether the independent message page corresponding to the identification information has been established according to the identification information; wherein
the establishing module (320) is further adapted to establish the independent message page corresponding to the identification when the independent message page corresponding to the identification information is not established.

## Patentansprüche

1. Verfahren zum Einrichten einer unabhängigen Nachrichtenseite für Instant Messaging, IM, Werkzeuge, umfassend:
Erlangen (101), durch einen IM-Client, eines Auslöseereignisses für eine Mikro-Blog-Nachricht in einem Hauptpanel des IM-Clients und Erlangen von Identifizierungsinformation der Mikro-Blog-Nachricht entsprechend dem Auslöseereignis;
Bestimmen (102) einer unabhängigen Nachrichtenseite durch den IM-Client, die der Identifizierungsinformation der Mikro-Blog-Nachricht entspricht;
Anzeigen (103) der unabhängigen Nachrichtenseite durch den IM-Client; **dadurch gekennzeichnet, dass**
die unabhängige Nachrichtenseite einen Anzeigebereich für Sendernachrichten aufweist;
der Schritt des Bestimmens einer unabhängigen Nachrichtenseite durch den IM-Client, die der Identifizierungsinformation der Mikro-Blog-Nachricht entspricht, ferner umfasst:
Erlangen von Inhalten und eines Typs der Mikro-Blog-Nachricht durch den IM-Client entsprechend der Identifizierungsinformation der Mikro-Blog-Nachricht und Anzeigen der Inhalte und des Typs der Mikro-Blog-Nachricht im Anzeigebereich für Sendernachrichten.

2. Verfahren nach Anspruch 1, wobei die unabhängige Nachrichtenseite weiterhin mindestens einen umfasst von: einem Senderinformationsbereich, einem Nachrichtenquellen-Anzeigebereich und einem bestimmten Informationsanzeigebereich.

3. Verfahren nach Anspruch 2, wobei wenn die unabhängige Nachrichtenseite weiterhin den Senderinformationsbereich umfasst,
Bestimmen einer unabhängigen Nachrichtenseite, die der Identifizierungsinformation der Mikro-Blog-Nachricht entspricht, durch den IM-Client, umfasst:
Erlangen einer Benutzeridentifikationsnummer, UIN, eines Absenders der Mikro-Blog-Nachricht durch den IM-Client, entsprechend der Identifikationsinformation der Mikro-Blog-Nachricht,
Erlangen eines Kopfporträts des Absenders gemäß der UIN durch den IM-Client und Erlangen von Authentifizierungsinformation des Absenders;
Anzeigen des Kopfporträts und der Authentifizierungsinformation durch den IM-Client im Senderinformationsanzeigebereich.

4. Verfahren nach Anspruch 2, wobei wenn die unabhängige Nachrichtenseite ferner den Nachrichtenquellen-Anzeigebereich umfasst,
Bestimmen einer unabhängigen Nachrichtenseite, die der Identifizierungsinformation der Mikro-Blog-Nachricht entspricht, durch den IM-Client, umfasst:
Erlangen von Inhalten und eines Typs einer Nachrichtenquelle der Mikro-Blog-Nachricht durch den IM-Client entsprechend der Identifizierungsinformation der Mikro-Blog-Nachricht und Anzeigen des Inhalts und des Typs der Nachrichtenquelle im Nachrichtenquellen-Anzeigebereich.

5. Verfahren nach Anspruch 2, wobei wenn die unabhängige Nachrichtenseite weiterhin einen bestimmten Informationsanzeigebereich umfasst;
Bestimmen einer unabhängigen Nachrichtenseite, die der Identifizierungsinformation der Mikro-Blog-Nachricht entspricht, durch den IM-Client, umfasst:
Erlangen der Sendezeit und des Sendemodus der Mikro-Blog-Nachricht durch den IM-Client entsprechend der Identifizierungsinformation der Mikro-Blog-Nachricht und Anzeigen der Sendezeit und des Sendemodus der Mikro-Blog-Nachricht im bestimmten Informationsanzeigebereich.

6. Verfahren nach Anspruch 1, wobei Bestimmen einer unabhängigen Nachrichtenseite, die der Identifizierungsinformation der Mikro-Blog-Nachricht entspricht, durch den IM-Client, umfasst:
Bestimmen durch den IM-Client, ob die unabhängige Nachrichtenseite, die der Identifizierungsinformation entspricht, entsprechend der Identifizierungsinformation eingerichtet wurde;
Einrichten der der Identifizierung entsprechenden unabhängigen Nachrichtenseite durch den IM-Client, wenn die der Identifizierungsinformation entsprechende unabhängige Nachrichtenseite nicht eingerichtet ist.

7. Verfahren nach Anspruch 6, wobei die Einrichtung der der Identifizierung entsprechenden unabhängigen Nachrichtenseite durch den IM-Client umfasst:
Einrichten der unabhängigen Nachrichtenseite, wenn keine unabhängige Nachrichtenseite eingerichtet ist, und Inhalten der unabhängigen Nachrichtenseite, die der der Identifizierungsinformation entspricht;
Aktualisieren einer eingerichteten unabhängigen Nachrichtenseite, wenn die eingerichtete unabhängige Nachrichtenseite nicht der Identifizierungsinformation entspricht, wobei Inhalte der eingerichteten unabhängigen Nachrichtenseite entsprechend der Identifizierungsinformation aktualisiert werden.

8. Verfahren nach einem der Ansprüche 1 bis 7, wobei die Identifizierungsinformation der Mikro-Blog-Nachricht ein Schlüsselwert der Mikro-Blog-Nachricht ist.

9. Vorrichtung zum Einrichten einer unabhängigen Nachrichtenseite für Instant-Messaging-, IM-, Werkzeuge, umfassend:
ein Erlangungsmodul (310), das eingerichtet ist, um ein Auslöseereignis für eine Mikro-Blog-Nachricht in einem Hauptpanel eines IM-Clients zu erlangen und um Identifizierungsinformation der Mikro-Blog-Nachricht entsprechend dem Auslöseereignis zu erhalten;
ein Einrichtungsmodul (320), das eingerichtet ist, um eine unabhängige Nachrichtenseite zu bestimmen, die der Identifikationsinformation der vom Erlangungsmodul erlangten Mikro-Blog-Nachricht entspricht;
ein Anzeigemodul (330), das eingerichtet ist, um die unabhängige Nachrichtenseite anzuzeigen, die vom Einrichtungsmodul eingerichtet wurde;
**dadurch gekennzeichnet, dass** das Einrichtungsmodul (320) ferner eingerichtet ist, um, wenn die unabhängige Nachrichtenseite einen Anzeigebereich für Sendernachrichten umfasst, Inhalte und einen Typ der Mikro-Blog-Nachricht gemäß der Identifizierungsinformation der Mikro-Blog-Nachricht zu erlangen und den Inhalt und den Typ der Mikro-Blog-Nachricht im Anzeigebereich für Sendernachrichten anzuzeigen.

10. Vorrichtung nach Anspruch 9, wobei
das Einrichtungsmodul (320) ferner eingerichtet ist, um, wenn die unabhängige Nachrichtenseite einen Senderinformationsbereich umfasst, eine UIN eines Senders der Mikro-Blog-Nachricht gemäß der Identifikationsinformation der Mikro-Blog-Nachricht zu erhalten; ein Kopfporträtbild des Senders gemäß der UIN zu erhalten und Authentifizierungsinformation des Senders zu erhalten; das Kopfporträtbild und die Authentifizierungsinformation in dem Senderinformationsbereich anzuzeigen.

11. Vorrichtung nach Anspruch 9, wobei
das Einrichtungsmodul (320) ferner eingerichtet ist, um, wenn die unabhängige Nachrichtenseite einen Nachrichtenquellen-Anzeigebereich umfasst, Inhalte und einen Typ einer Nachrichtenquelle der Mikro-Blog-Nachricht gemäß der Identifikationsinformation der Mikro-Blog-Nachricht zu erlangen und die Inhalte und den Typ der Nachrichtenquelle in dem Nachrichtenquellen-Anzeigebereich anzuzeigen.

12. Vorrichtung nach Anspruch 9, wobei
das Einrichtungsmodul (320) ferner eingerichtet ist, um, wenn die unabhängige Nachrichtenseite einen bestimmten Informationsanzeigebereich umfasst, Sendezeit und einen Sendemodus der Mikro-Blog-Nachricht entsprechend der Identifikationsinformation der Mikro-Blog-Nachricht zu erlangen und die Sendezeit und den Sendemodus der Mikro-Blog-Nachricht in dem bestimmten Informationsanzeigebereich anzuzeigen.

13. Vorrichtung nach Anspruch 9, ferner umfassend:
ein Bestimmungsmodul (340), das ferner eingerichtet ist, um zu bestimmen, ob die unabhängige Nachrichtenseite, die der Identifikationsinformation entspricht, gemäß der Identifikationsinformation eingerichtet wurde; wobei
das Einrichtungsmodul (320) ferner eingerichtet ist, um die der Identifizierung entsprechende unabhängige Nachrichtenseite einzurichten, wenn die der Identifizierungsinformation entsprechende unabhängige Nachrichtenseite nicht eingerichtet ist.

## Revendications

1. Procédé d'établissement d'une page de message indépendante destinée à des outils de messagerie instantanée, IM, comprenant :
l'obtention (101), par un client d'IM, d'un événement de déclenchement pour un message de micro-blog dans un panneau principal du client d'IM, et l'obtention d'informations d'identification du message de micro-blog en fonction de l'événement de déclenchement ;
la détermination (102), par le client d'IM, d'une page de message indépendante correspondant aux informations d'identification du message de micro-blog ;
l'affichage (103), par le client d'IM, de la page de message indépendante ;
**caractérisé en ce que** :
la page de message indépendante comprend une zone d'affichage du message de l'expéditeur ;
l'étape de détermination, par le client d'IM, d'une page de message indépendante correspondant aux informations d'identification du message de micro-blog comprend en outre :
l'obtention, par le client d'IM, de contenus et d'un type du message de micro-blog en fonction des informations d'identification du message de micro-blog, et l'affichage des contenus et du type de message de micro-blog dans la zone d'affichage du message de l'expéditeur.

2. Procédé selon la revendication 1, dans lequel la page de message indépendante comprend en outre au moins une zone parmi : une zone d'informations de l'expéditeur, une zone d'affichage de la source du message et une zone d'affichage d'informations spécifiques.

3. Procédé selon la revendication 2, dans lequel lorsque la page de message indépendante comprend en outre la zone d'informations de l'expéditeur,
la détermination, par le client d'IM, d'une page de message indépendante correspondant aux informations d'identification du message de micro-blog comprend :
l'obtention, par le client d'IM, d'un numéro d'identification d'utilisateurs, UIN, d'un expéditeur du message de micro-blog, en fonction des informations d'identification du message de micro-blog,
l'obtention, par le client d'IM, d'une image portrait de la tête de l'expéditeur en fonction de l'UIN, et l'obtention d'informations d'authentification de l'expéditeur ;
l'affichage, par le client d'IM, de l'image portrait de la tête et des informations d'authentification dans la zone d'affichage d'informations de l'expéditeur.

4. Procédé selon la revendication 2, dans lequel lorsque la page de message indépendante comprend en outre la zone d'affichage de la source du message,
la détermination, par le client d'IM, d'une page de message indépendante correspondant aux informations d'identification du message de micro-blog comprend :
l'obtention, par le client d'IM, de contenus et d'un type d'une source de message du message de micro-blog en fonction des informations d'identification du message de micro-blog, et l'affichage des contenus et du type de la source du message dans la zone d'affichage de la source du message.

5. Procédé selon la revendication 2, dans lequel lorsque la page de message indépendante comprend en outre une zone d'affichage d'informations spécifiques ;
la détermination, par le client d'IM, d'une page de message indépendante correspondant aux informations d'identification du message de micro-blog comprend :
l'obtention, par le client d'IM, d'un moment d'envoi et d'un mode d'envoi du message de micro-blog en fonction des informations d'identification du message de micro-blog, et
l'affichage du moment d'envoi et du mode d'envoi du message de micro-blog dans la zone d'affichage d'informations spécifiques.

6. Procédé selon la revendication 1, dans lequel la détermination, par le client d'IM, d'une page de message indépendante correspondant aux informations d'identification du message de micro-blog comprend :
la détermination, par le client d'IM, pour savoir si la page de message indépendante correspondant aux informations d'identification a été établie en fonction des informations d'identification ;
l'établissement, par le client d'IM, de la page de message indépendante correspondant à l'identification lorsque la page de message indépendante correspondant aux informations d'identification n'est pas établie.

7. Procédé selon la revendication 6, dans lequel établir, par le client d'IM, la page de message indépendante correspondant à l'identification comprend :
l'établissement de la page de message indépendante lorsqu'aucune page de message indépendantes n'est établie, et des contenus de la page de message indépendante correspondant aux informations d'identification ;
la mise à jour d'une page de message indépendante établie lorsque la page de message indépendante établie ne correspond pas aux informations d'identification, et des contenus de la page de message indépendante établie mise à jour correspondant aux informations d'identification.

8. Procédé selon l'une quelconque des revendications 1 à 7, dans lequel les informations d'identification du message de micro-blog sont une valeur clé du message de micro-blog.

9. Appareil d'établissement d'une page de message indépendante destinée à des outils de messagerie instantanée, IM, comprenant :
un module d'obtention (310), adapté pour obtenir un événement de déclenchement pour un message de micro-blog dans un panneau principal d'un client d'IM, et obtenir des informations d'identification du message de micro-blog en fonction de l'événement de déclenchement ;
un module d'établissement (320), adapté pour déterminer une page de message indépendante correspondant aux informations d'identification du message de micro-blog obtenu par le module d'obtention ;
un module d'affichage (330), adapté pour afficher la page de message indépendante établie par le module d'établissement ;
**caractérisé en ce que** le module d'établissement (320) est adapté en outre pour, lorsque la page de message indépendante comprend une zone d'affichage du message de l'expéditeur, obtenir des contenus et un type du message de micro-blog en fonction des informations d'identification du message de micro-blog, et afficher les contenus et le type de message de micro-blog dans la zone d'affichage du message de l'expéditeur.

10. Appareil selon la revendication 9, dans lequel le module d'établissement (320) est adapté en outre pour, lorsque la page de message indépendante comprend une zone d'informations d'expéditeur, obtenir un UIN d'un expéditeur du message de micro-blog en fonction des informations d'identification du message de micro-blog ; obtenir une image portrait de la tête de l'expéditeur en fonction de l'UIN, et obtenir des informations d'authentification de l'expéditeur ; afficher l'image portrait de la tête et les informations d'authentification dans la zone d'affichage d'informations de l'expéditeur.

11. Appareil selon la revendication 9, dans lequel le module d'établissement (320) est adapté en outre pour, lorsque la page de message indépendante comprend une zone d'affichage de la source du message, obtenir des contenus et un type d'une source de messages du message de micro-blog en fonction des informations d'identification du message de micro-blog, et afficher les contenus et le type de la source du message dans la zone d'affichage de la source du message.

12. Appareil selon la revendication 9, dans lequel le module d'établissement (320) est adapté en outre pour, lorsque la page de message indépendante comprend une zone d'affichage d'informations spécifiques, obtenir un moment d'envoi et un mode d'envoi du message de micro-blog en fonction des informations d'identification du message de micro-blog, et afficher le moment d'envoi et le mode d'envoi du message de micro-blog dans la zone d'affichage d'informations spécifiques.

13. Appareil selon la revendication 9, comprenant en outre :
un module de détermination (340), adapté en outre pour déterminer si la page de message indépendante correspondant aux informations d'identification a été établie en fonction des informations d'identification ; dans lequel
le module d'établissement (320) est adapté en outre pour établir la page de message indépendante correspondant à l'identification lorsque la page de message indépendante correspondant aux informations d'identification n'est pas établie.
